# EUROPEAN PATENT APPLICATION

(11) **EP 4 503 805 A1**
(43) Date of publication of application: **05.02.2025**
(21) Application number: 23795641.2
(22) Date of filing: 28.04.2023
(51) Int. Cl.: H04W 72/04

(54) **RESOURCE SCHEDULING METHOD AND SYSTEM, NETWORK DEVICE, AND TERMINAL**

(30) Priority: 28.04.2022 CN 202210459924
(71) Applicant: China Telecom Corporation Limited, Beijing 100033 (CN)
(72) Inventor: NAN, Fang, Beijing 100033 (CN); ZHU, Jianchi, Beijing 100033 (CN); LIU, Guiqing, Beijing 100033 (CN); ZHANG, Xin, Beijing 100033 (CN); LI, Nanxi, Beijing 100033 (CN); SHE, Xiaoming, Beijing 100033 (CN); MAO, Congjie, Beijing 100033 (CN)
(74) Representative: Reddie & Grose LLP
(86) International application number: PCT/CN2023/091686
(87) International publication number: WO 2023/208209

(57) **Abstract**

The present invention relates to the technical field of communications, and relates to a resource scheduling method and system, a network device, and a terminal. The method of the present invention comprises: the network device sends downlink control information (DCI) to the terminal, wherein the DCI comprises control information of physical downlink shared channel (PDSCHs) or physical uplink shared channels (PUSCHs) of multiple cells, and the DCI is used for scheduling the PDSCHs or PUSCHs of some or all of the multiple cells; and in some or all cells, the network device sends the PDSCHs to the terminal or receives the PUSCHs sent by the terminal.

## Description

### CROSS-REFERENCE TO RELATED APPLICATIONS

The present application is based on and claims priority to China Patent Application No. 202210459924.2 filed on April 28, 2022, the disclosure of which is incorporated by reference herein in its entirety.

### TECHNICAL FIELD

The present disclosure relates to the field of communication technology, particularly to a resource scheduling method, a system, a network device, and a terminal.

### BACKGROUND

The fifth generation mobile communication technology (5th Generation mobile networks, 5th Generation wireless systems or 5th-Generation, 5G) New Radio (NR) supports spectrum bands in different frequency ranges (FR). Due to the re-farming of spectrum used in previous generations of mobile communication networks, spectrum bands available for 5G NR in the low-frequency FR1 bands are often more dispersed and have narrower bandwidths. For FR2 frequency bands and some FR1 frequency bands, wider spectrum bands are available and thus multi-carrier operation is required. Higher throughput and wider coverage can be achieved by ensuring that these dispersed spectrum bands or wider bandwidth spectrum bands can be used in a more spectrum-efficient, power-efficient and flexible manner.

At present, the scheduling mechanism of NR only supports scheduling a physical downlink shared channel (PDSCH) or physical uplink shared channel (PUSCH) in a cell via downlink control information (DCI). When scheduling PDSCHs or PUSCHs in multiple cells, each cell sends its own scheduling DCI, so the scheduling of PDSCHs or PUSCHs in multiple cells requires sending multiple DCIs.

### SUMMARY

According to some embodiments of the present disclosure, there is provided a resource scheduling method performed by a network device, comprising: sending downlink control information (DCI) to a terminal, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells; and sending the PDSCHs to the terminal or receiving the PUSCHs sent from the terminal in the part or all of the cells.

In some embodiments, the method further comprises: sending a radio resource control (RRC) information element to the terminal before sending the DCI to the terminal, wherein the RRC information element comprises information indicating the multiple cells in which the PDSCHs or PUSCHs that are able to be scheduled by the DCI are located.

In some embodiments, a serving cell configuration information element in the RRC information element comprises first indication information, wherein the first indication information is configured to indicate that a PDSCH or PUSCH in a cell corresponding to the serving cell configuration information element is able to be scheduled by the DCI.

In some embodiments, the method further comprises: sending a radio resource control (RRC) information element to the terminal before sending the DCI to the terminal, wherein the RRC information element comprises information indicating a cell for transferring the DCI to enable the terminal to receive the DCI in the cell for transferring the DCI.

In some embodiments, a serving cell configuration information element in the RRC information element comprises second indication information, wherein the second indication information is configured to indicate that the DCI is to be transferred in a cell corresponding to the serving cell configuration information element, or the second indication information is configured to indicate a cell in which the DCI for scheduling a PDSCH or PUSCH in a cell corresponding to the serving cell configuration information element is located.

In some embodiments, the control information for the PDSCHs or PUSCHs in the multiple cells comprises: common control information of the multiple cells and dedicated control information corresponding to each of the multiple cells.

In some embodiments, the common control information of the multiple cells occupies consecutive bit positions in the DCI; the dedicated control information corresponding to the each of the multiple cells occupies consecutive bit positions in the DCI; and the bit positions occupied by the common control information of the multiple cells are lower than the bit positions occupied by the dedicated control information corresponding to the each of the multiple cells.

In some embodiments, the common control information of the multiple cells and the dedicated control information corresponding to the each of the multiple cells occupy a plurality of fields in the DCI, wherein the plurality of fields comprise a first field with a fixed number of bits and a second field with a number of bits determined by configuration information of the multiple cells, and in all the fields in the DCI, a bit position occupied by the first field is lower than a bit position occupied by the second field.

In some embodiments, the dedicated control information corresponding to a same cell occupies consecutive bit positions; and the bit positions occupied by the dedicated control information corresponding to different cells are arranged in the DCI in a predetermined order.

In some embodiments, the dedicated control information corresponding to the each of the multiple cells comprises one or more types of information, each of the one or more types of information occupying one field; and the bit positions occupied by information corresponding to different cells occupying a same field are consecutive and are arranged in a predetermined order.

In some embodiments, the predetermined order is an ascending or descending order of cell indices of the multiple cells from a low bit position to a high bit position in the DCI; or the RRC information element sent to the terminal comprise: bit position indices of the dedicated control information corresponding to the multiple cells, wherein the predetermined order is an ascending or descending order of the bit position indices of the dedicated control information corresponding to the multiple cells from a low bit position to a high bit position in the DCI.

In some embodiments, for the each of the multiple cells, in response to the DCI not scheduling a PDSCH or PUSCH for the each of the multiple cells, the common control information indicates invalid control information for the each of the multiple cells and/or the dedicated control information corresponding to the each of the multiple cells indicates invalid control information.

In some embodiments, for the each of the multiple cells, in response to all or part of bits of the dedicated control information corresponding to the each of the multiple cells indicating invalid control information, it indicates that no scheduling is performed for a PDSCH or PUSCH in the each of the multiple cells.

In some embodiments, all or part of bits of the dedicated control information corresponding to the each of the multiple cells indicating invalid control information comprises: all bits of the dedicated control information corresponding to the each of the multiple cells in a field indicating frequency domain resource assignment being set to 0 or 1.

According to other embodiments of the present disclosure, there is provided a resource scheduling method performed by a terminal, comprising: receiving downlink control information (DCI) message sent from a network device, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells; and receiving PDSCHs sent from the network device or sending PUSCHs to the network device in the part or all of the cells according to the DCI.

In some embodiments, the method further comprises: receiving a radio resource control (RRC) information element sent from the network device before the terminal receiving the DCI sent from the network device, wherein the RRC information element comprise information indicating the multiple cells in which the PDSCHs or PUSCHs that are able to be scheduled by the DCI are located, and/or information indicating a cell for transferring the DCI.

In some embodiments, the control information for PDSCHs or PUSCHs in the multiple cells comprises: common control information of the multiple cells and dedicated control information corresponding to each of the multiple cells.

In some embodiments, for the each of the multiple cells, in response to all or part of bits of the dedicated control information corresponding to the each of the multiple cells indicating invalid control information, it indicates that no scheduling is performed for a PDSCH or PUSCH in the each of the multiple cells.

In some embodiments, all or part of bits of the dedicated control information corresponding to the each of the multiple cells indicating invalid control information comprises: all bits of the dedicated control information corresponding to the each of the multiple cells in a field indicating frequency domain resource assignment being set to 0 or 1.

According to still other embodiments of the present disclosure, there is provided a network device, wherein the network device comprises a transmitter, or the network device comprises a transmitter and a receiver; the transmitter is configured to send downlink control information (DCI) to a terminal, wherein the DCI comprises control information for physical downlink shared channels (PDSCHs) or physical uplink shared channels (PUSCHs) in multiple cells, the DCI is configured to schedule the PDSCHs or PUSCHs in part or all of the multiple cells, and the transmitter is configured to send the PDSCHs to the terminal in the part or all of the cells; the receiver is configured to receive PUSCHs sent from the terminal in the part or all of the cells.

According to still other embodiments of the present disclosure, there is provided a terminal, wherein the terminal comprises a receiver, or the terminal comprises a transmitter and a receiver; the receiver is configured to receive downlink control information (DCI) message sent from a network device, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells, and the receiver is configured to receive PDSCHs sent from the network device in the part or all of the cells according to the DCI; and the transmitter is configured to send the PUSCHs to the network device in the part or all of the cells according to the DCI.

According to still other embodiments of the present disclosure, there is provided a communication apparatus, comprising: a processor; and a memory coupled to the processor for storing instructions that, when executed by the processor, cause the processor to execute the resource scheduling method of any one of the foregoing embodiments.

According to still other embodiments of the present disclosure, there is provided a resource scheduling system, comprising: the network device according to any of the foregoing embodiments and the terminal according to any of the foregoing embodiments.

Other features and advantages of the present disclosure will become clear from the following detailed description of exemplary embodiments of the present disclosure with reference to the accompanying drawings.

### BRIEF DESCRIPTION OF THE DRAWINGS

In order to more clearly explain the embodiments of the present disclosure or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 shows a flowchart of a resource scheduling method according to some embodiments of the present disclosure;
FIG. 2A shows a schematic structural diagram of DCI according to some embodiments of the present disclosure;
FIG. 2B shows a schematic structural diagram of DCI according to other embodiments of the present disclosure;
FIG. 2C shows a schematic structural diagram of DCI according to still other embodiments of the present disclosure;
FIG. 3 shows a flowchart of a resource scheduling method according to other embodiments of the present disclosure;
FIG. 4 shows a schematic structural diagram of a network device according to some embodiments of the present disclosure;
FIG. 5 shows a schematic structural diagram of a terminal according to some embodiments of the present disclosure;
FIG. 6 is a schematic structural diagram of a communication apparatus according to some embodiments of the present disclosure;
FIG. 7 is a schematic structural diagram of a communication apparatus according to other embodiments of the present disclosure;
FIG. 8 shows a schematic structural diagram of a resource scheduling system according to some embodiments of the present disclosure.

### DETAILED DESCRIPTION

Below, a clear and complete description will be given for the technical solution of embodiments of the present disclosure with reference to the figures of the embodiments of the present disclosure. Obviously, merely some embodiments of the present disclosure, rather than all embodiments thereof, are given herein. The following description of at least one exemplary embodiment is in fact merely illustrative and is in no way intended as a limitation to the present disclosure, its application or use. All other embodiments obtained by those of ordinary skill in the art based on the embodiments of the present disclosure without creative efforts shall fall within the protection scope of the present disclosure.

The inventors have found that the existing scheduling method of PDSCH or PUSCH results in excessive overhead. In particular, the characteristics of 5G frequency bands make it difficult to fully exploit the spectrum resources, resulting in low spectrum efficiency, low power efficiency, etc.

A technical problem to be solved by the present disclosure is to propose a new scheduling method of PDSCH or PUSCH, which can improve the utilization and efficiency of spectrum resources and reduce overhead.

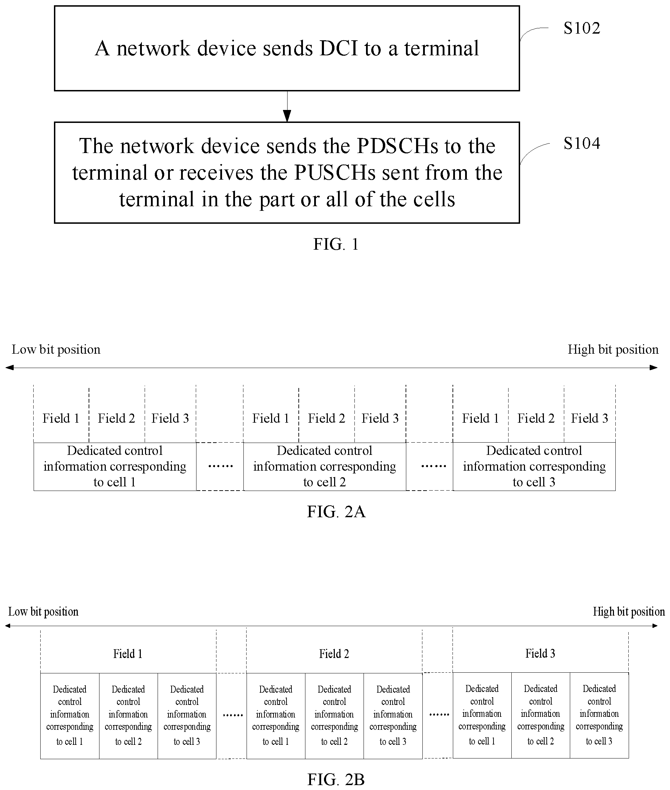

The present disclosure provides a resource scheduling method, which will be described below with reference to FIGS. 1 to 3.

FIG. 1 shows a flowchart of a resource scheduling method according to some embodiments of the present disclosure. As shown in FIG. 1, the method of this embodiment comprises steps S102 to S104.

In step 102, a network device sends DCI to a terminal, and correspondingly, the terminal receives the DCI sent from the network device.

The terminal is also know as UE (User Equipment). The network device is , for example, a base station. The DCI (also known as Multi-Cell Scheduling DCI) comprises , for example, control information for PDSCHs or PUSCHs in multiple cells, and the DCI is configured to schedule the PDSCHs or PUSCHs in part or all of the multiple cells. In response to the network device scheduling PDSCHs, the DCI is configured to schedule PDSCHs in part or all of the multiple cells, and in response to the network device scheduling PUSCHs, the DCI is configured to schedule PUSCHs in part or all of the multiple cells. The multiple cells may comprise cells in a same frequency band or cells in different frequency bands, and one PDSCH or PUSCH can be scheduled in each cell.

It should be noted that the DCI in the present disclosure can be configured to schedule PDSCHs or PUSCHs for part or all of a plurality of carriers. One PDSCH or PUSCH can be scheduled for each carrier, and the cells in the present disclosure can be replaced with carriers without affecting the application of the solution, and which falls within the scope of protection of the present disclosure, and will not be repeated here.

An uplink carrier of a cell can comprise a supplementary uplink (SUL) carrier and a normal uplink (NUL) carrier. For each cell, the DCI can be configured to schedule and indicate that a PUSCH of the cell is transferred on the SUL carrier or the NUL carrier. The DCI can also be configured to schedule and indicate that a PUSCH of the cell is transferred on both the SUL carrier and the NUL carrier.

In some embodiments, the control information for the PDSCHs or PUSCHs in the multiple cells comprises: common control information of the multiple cells and dedicated control information corresponding to each of the multiple cells. The common control information of the multiple cells has a same value for scheduling the PDSCH or PUSCH in each cell. The common control information of the multiple cells can indicate same information for the PDSCHs or PUSCHs in the cells, or jointly indicate different information for the PDSCHs or PUSCHs in the cells. The dedicated control information corresponding to each cell comprises dedicated control information for scheduling a PDSCH or PUSCH in each cell. The dedicated control information corresponding to different cells may have different values for scheduling the PDSCHs or PUSCHs in the cells.

In some embodiments, for the each of the multiple cells, in response to the DCI not scheduling a PDSCH or PUSCH for the each of the multiple cells, the common control information indicates invalid control information for the each of the multiple cells and/or the dedicated control information corresponding to the each of the multiple cells indicates invalid control information. In response to the DCI being configured to schedule PDSCHs or PUSCHs in part of the multiple cells, the PDSCHs or PUSCHs of some cells are not scheduled by the DCI. For these PDSCHs or PUSCHs of the unscheduled cells, the common control information indicates invalid control information, and/or the corresponding dedicated control information indicates invalid control information.

The DCI may indicate invalid control information for a PDSCH or PUSCH in a certain cell, indicating that no scheduling will be performed for the PDSCH or PUSCH in the certain cell. For example, all or part of the bits of the dedicated control information corresponding to the cell indicate invalid control information, indicating that no scheduling is performed for the PDSCH or PUSCH in the cell. For the dedicated control information indicating invalid control information, for example, all or part of its bits are set to a preset value. For example, the bits in the dedicated control information corresponding to the cell for indicating one or more of frequency domain resource assignment (FDRA, frequency domain resource allocation), the modulation and coding scheme, the number of hybrid automatic repeat request (HARQ) processes are set to 0 or 1. For another example, in a case where the common control information of the multiple cells provides a joint indication of different information for the PDSCHs or PUSCHs in the cells, invalid control information can be indicated for the PDSCHs or PUSCHs in one of the cells.

Table 1 shows some embodiments of the common control information of multiple cells that provides a joint indication of different information for PDSCHs or PUSCHs in the cells. For each cell, a mapping relationship between values of the common control information of the multiple cells and the indicated control information for the PDSCHs or PUSCHs in the cells can be predefined. For example, if the value of the common control information is 3, it indicates first control information for cell 1, second control information for cell 2, and first control information for cell 3. For another example, if the value of the common control information is 5, it indicates invalid control information for cell 1......

**Table 1**

| Common control information | Control information for PDSCHs in 3 cells |
|---|---|
| Value 1 | first control information for the PDSCH in cell 1, first control information for the PDSCH in cell 2, first control information for the PDSCH in cell 3 |
| Value 2 | second control information for the PDSCH in cell 1, first control information for the PDSCH in cell 2, first control information for the PDSCH in cell 3 |
| Value 3 | first control information for the PDSCH in cell 1, second control information for the PDSCH in cell 2, first control information for the PDSCH in cell 3 |
| Value 4 | first control information for the PDSCH in cell 1, first control information for the PDSCH in cell 2, second control information for the PDSCH in cell 3 |
| Value 5 | invalid control information for the PDSCH in cell 1 (no scheduling on PDSCH in cell 1), first control information for the PDSCH in cell 2, first control information for the PDSCH in cell 3 |
| ...... | ...... |

In the above embodiment, the number of bits of the DCI does not change with the number of scheduled cells, resulting in a lower complexity of terminal detection.

The common control information of the multiple cells can comprise one or more types of information, each occupying one field. For example, the common control information of the multiple cells comprises at least one of an identifier for a DCI format, a downlink allocation index, a power control command for a scheduled physical uplink control channel (PUCCH), a PUCCH resource indicator, or a PDSCH to HARQ feedback timing indicator, which are not limited to the examples given above.

The dedicated control information corresponding to each cell can comprise one or more types of information, each occupying one field. For example, the dedicated control information corresponding to each cell comprises at least one of a bandwidth part (BWP) indicator, a modulation and coding scheme, a new data indicator, a redundancy version, or a HARQ process number, which are not limited to the examples given above.

For example, the DCI comprises fields for an identifier for a DCI format, frequency domain resource assignment, time domain resource allocation, modulation and coding scheme, a new data indicator, a redundancy version, a downlink allocation index, a power control command for a scheduled PUCCH, a PUCCH resource indicator, a PDSCH to HARQ feedback timing indicator, etc., which are not limited to the examples given above. Reference can be made to the existing standard for the field comprised in the DCI, and the DCI in the present disclosure may not comprise a carrier indicator field. For one or more types of information comprised in the common control information of the multiple cells, and one or more types of information comprised in the dedicated control information corresponding to each cell, each type of information occupying one corresponding field in the DCI. For example, the identifier for the DCI format in the common control information for the multiple cells occupies a DCI format identifier field in the DCI, and the modulation and coding scheme in the dedicated control information corresponding to each cell occupies a modulation and coding scheme field in the DCI.

Below, the arrangement of common control information for multiple cells and dedicated control information for each cell in the DCI will be described with reference to FIGS. 2A to 2C.

In some embodiments, the dedicated control information corresponding to a same cell occupies consecutive bit positions; and the bit positions occupied by the dedicated control information corresponding to different cells are arranged in the DCI in a predetermined order.

As shown in FIG. 2A, the dedicated control information corresponding to the same cell occupies consecutive bits in different fields. For example, the dedicated control information corresponding to cell 1 comprises three types of information occupying field 1, field 2 and field 3 respectively. These three types of information occupy consecutive bit positions in the DCI. Similarly, the three types of information occupying field 1, field 2 and field 3 respectively corresponding to cell 2 also occupy consecutive bit positions in the DCI... As shown in FIG. 2A, the ellipses indicate that there may or may not be other bits between the dedicated control information corresponding to cell 1 and the dedicated control information corresponding to cell 2.

In other embodiments, the dedicated control information corresponding to each cell comprises one or more types of information, each of the one or more types of information occupying one field; and the bit positions occupied by information corresponding to different cells occupying a same field are consecutive and are arranged in a predetermined order.

As shown in FIG. 2B, the bit positions occupied by information corresponding to different cells that occupies the same field are consecutive. For example, the bit positions of the information occupying field 1 corresponding to cells 1, 2, and 3 are consecutive, and the bit positions of the information occupying field 2 corresponding to cells 1, 2, and 3 are consecutive... As shown in FIG. 2B, the ellipses indicate that there may be or may not be other bits between fields 1 and 2.

In some embodiments, the predetermined order is an ascending or descending order of cell indices of the multiple cells from a low bit position to a high bit position in the DCI. The cell index, for example, is the Serv Cell Index (ServCellIndex) of each cell. If the uplink carrier of a cell is configured to comprise a SUL carrier and a NUL carrier, in the implementation of the DCI scheduling a PUSCH in the cell for simultaneous transmission on the SUL and NUL carriers, the SUL and NUL carriers have the same ServCellIndex, and the dedicated control information corresponding to the SUL and NUL carriers is arranged in the order NUL before SUL or SUL before NUL. The information corresponding to the SUL and NUL carriers occupying the same field is arranged in the order NUL before SUL or SUL before NUI,.

As shown in FIG. 2A, the cell indices of the cells are, for example, 1, 2 and 3. The dedicated control information corresponding to different cells is arranged in the ascending order of the cell indices of the cells in the DCI from the low bit position to the high bit position. As shown in Fig. 2B, the information corresponding to different cells that occupies the same field is arranged in the ascending order of the cell indices of the cells in the DCI from the low bit position to the high bit position.

In other embodiments, the radio resource control (RRC) information element sent from the network device to the terminal comprises: bit position indices of the dedicated control information corresponding to the multiple cells, wherein the predetermined order is an ascending or descending order of the bit position indices of the dedicated control information corresponding to the multiple cells from a low bit position to a high bit position in the DCI. A bit position index of the dedicated control information for each cell can also be configured in the RRC information element. For example, a bit position index of dedicated control information of a cell corresponding to the serving cell configuration information element is configured in a multi cell scheduling configuration (MultiCellSchedulingConfig) information element of a serving cell configuration information element in the RRC information element.

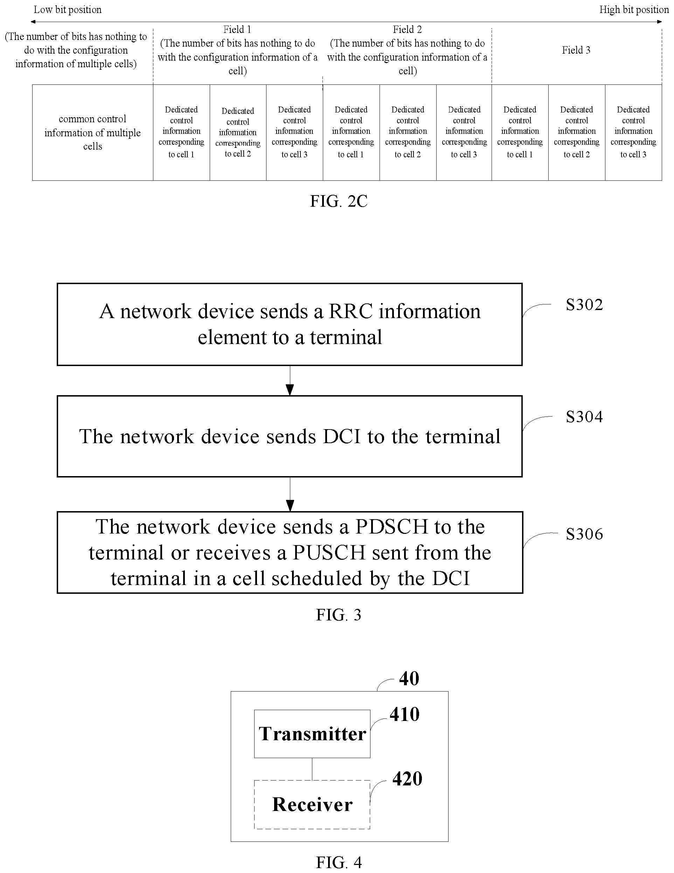

In some embodiments, the common control information of the multiple cells occupies consecutive bit positions in the DCI; the dedicated control information corresponding to the each of the multiple cells occupies consecutive bit positions in the DCI; and the bit positions occupied by the common control information of the multiple cells are lower than the bit positions occupied by the dedicated control information corresponding to the each of the multiple cells. As shown in FIG. 2C, if the common control information of the multiple cells occupies a plurality of fields, bits of the plurality of fields are consecutive. All bits of the dedicated control information corresponding to each cell can be consecutive bits. The common control information of the multiple cells may occupy lower bit positions among all bits of the DCI.

In some embodiments, the common control information of the multiple cells and the dedicated control information corresponding to the each of the multiple cells occupy a plurality of fields in the DCI, wherein the plurality of fields comprise a first field with a fixed number of bits and a second field with a number of bits determined by configuration information of the multiple cells, and in all the fields in the DCI, a bit position occupied by the first field is lower than a bit position occupied by the second field.

As shown in FIG. 2C, a field occupied by the common control information of the multiple cells, field 1 and field 2 have a fixed number of bits which has nothing to do with the configuration information of the cells and are arranged in lower bit positions relative to field 3 which has a number of bits determined by the configuration information of the cells. The number of bits occupied by one or more types of information in the dedicated control information corresponding to each cell may be related to the configuration information of the corresponding cell. For example, the number of bits in the frequency domain resource assignment field is related to the bandwidth of the activated BWP in the cell. The number of bits occupied by one or more types of information in the common control information of the multiple cells may be related to the configuration information of the multiple cells. For example, the bits of the BWP indicator in the common control information of the multiple cells jointly indicate the BWPs to be activated in each cell, and its number of bits is related to the number of BWPs configured in the cell. With the above arrangement, the bit position of the first field in the DCI is fixed, that is, the bit position does not change with the different situations of the scheduled cells, so that the terminal can quickly interpret this information.

In step 104, the network device sends PDSCHs to the terminal or receives PUSCHs sent from the terminal in the part or all of the cells. Correspondingly, the terminal receives the PDSCHs sent from the network device or sends the PUSCHs to the network device in the part or all of the cells according to the DCI.

In the above embodiment, the DCI sent from the network device to the terminal comprises control information for PDSCHs or PUSCHs in multiple cells, and can schedule the PDSCHs or PUSCHs in part or all of the multiple cells according to actual needs. After receiving the DCI sent from the network device, the terminal can know which cells receive PDSCHs or send PUSCHs, thereby achieving data transmission between the network device and the terminal. The solution of the above embodiment can achieve the scheduling of PDSCHs or PUSCHs of multiple cells using a single DCI, which can solve the problem of how to fully utilize spectrum resources when there are narrow bandwidth carriers of multiple scattered frequency bands in the low or medium frequency ranges, reduce the overhead of control channels, reduce the probability of control channel collisions, improve throughput, reduce terminal power consumption, and effectively improve the scheduling flexibility, spectrum efficiency, power efficiency, etc. of discrete spectrums or wide bandwidth spectrums.

Other embodiments of a resource scheduling method of the present disclosure will be described below with reference to FIG. 3.

FIG. 3 shows a flowchart of a resource scheduling method according to other embodiments of the present disclosure. As shown in FIG. 1, the method of the embodiment comprises steps S302 to S306.

In step 302, a network device sends RRC information element to a terminal, and correspondingly, the terminal receives the RRC information element sent from the network device.

In some embodiments, the RRC information element comprises information indicating the multiple cells in which the PDSCHs or PUSCHs that are able to be scheduled by the DCI are located. The control information for the multiple cells comprised in the DCI corresponds to multiple cells indicated in the RRC information element, in which the PDSCHs or PUSCHs that are able to be scheduled using the DCI are located. The DCI can be used to schedule the PDSCHs or PUSCHs in all or part (2 or more) of the multiple cells indicated by RRC information element.

In other embodiments, the RRC information element comprises information indicating a cell for transferring the DCI, which is configured to indicate the terminal to receive the DCI in the cell transferring the DCI.

The RRC information element can configure which cells can have their PDSCHs or PUSCHs scheduled by the DCI, i.e. a maximum number of cells that can be scheduled by the DCI and information about the cells. For example, a MultiCellSchedulingConfig information element can be added. The MultiCarrierSchedulingConfig is contained in a serving cell configuration (ServingCellConfig) information element, for example. The MultiCellSchedulingConfig comprises first indication information indicating that the PDSCH or PUSCH in a cell corresponding to the ServingCellConfig information element is able to be scheduled by the DCI. For example, the RRC information element can configure up to 3 or 5 cells, for which their PDSCHs or PUSCHs can be scheduled using a multi-cell scheduling DCI.

In some embodiments, a serving cell configuration information element in the RRC information element comprises first indication information, wherein the first indication information is configured to indicate that a PDSCH or PUSCH in a cell corresponding to the serving cell configuration information element is able to be scheduled by the DCI.

For example, a 1-bit first indication information can be added to the serving cell configuration information element corresponding to a cell in which a PDSCH or PUSCH is able to be scheduled by the DCI is located, to indicate that the PDSCH or PUSCH of the cell is able to be scheduled by the DCI. Alternatively, a preset number of bits (e.g. 1 bit) of first indication information can be added to the serving cell configuration information element corresponding to each cell. When a value of the first indication information is a first value (e.g. 1), it indicates that the PDSCH or PUSCH of the cell is able to be scheduled by the DCI. When the value of the first indication information is a second value (e.g. 0), it indicates that the PDSCH or PUSCH of the cell is not able to be scheduled by the DCI. Of course, it is also possible to directly indicate, in RRC, indices of cells in where the PDSCHs or PUSCHs that are able to be scheduled by the DCI are located, and the indication method is not limited to the examples given herein.

In some embodiments, a serving cell configuration information element in the RRC information element comprises second indication information, wherein the second indication information is configured to indicate that the DCI is to be transferred in a cell corresponding to the serving cell configuration information element, or the second indication information is configured to indicate a cell in which the DCI for scheduling a PDSCH or PUSCH in a cell corresponding to the serving cell configuration information element is located.

For example, a 1-bit second indication information can be added to the serving cell configuration information element corresponding to a cell in which the DCI is transferred, to indicate that the cell is configured to transfer the DCI. Alternatively, a preset number of bits (e.g. 1 bit) of second indication information can be added to the serving cell configuration information element corresponding to each cell. When a value of the second indication information is a third value (e.g., 1), it indicates that the cell is configured to transfer the DCI. When the value of the second indication information is a fourth value (e.g., 0), it indicates that the cell is not configured to transfer the DCI. Alternatively, second indication information is added to the serving cell configuration information element corresponding to each cell or cells in which PDSCHs or PUSCHs that are able to be scheduled using the DCI are located, to indicate the cell index of a cell that transfers the DCI. For example, the second indication information is comprised in the MultiCellSchedulingConfig. For example, if the second indication information is comprised in the serving cell configuration information element, as default, the PDSCH or PUSCH of a cell corresponding to the serving cell configuration information element can be scheduled using the DCI, so there is no need to comprise the first indication information in the serving cell configuration information element. The indication method can be set according to actual needs, and is not limited to the examples given herein.

In step S304, the network device sends DCI to the terminal, and correspondingly, the terminal receives the DCI sent from the network device.

In step S306, the network device sends a PDSCH to the terminal or receives a PUSCH sent from the terminal in a cell scheduled by the DCI. Correspondingly, the terminal receives the PDSCH sent from the network device or sends the PUSCH to the network device in the cell scheduled by the DCI.

For specific implementations of steps S304 to S306, reference may be made to steps S102 to S104, and the details will not be described herein.

The above embodiment can dynamically indicate multiple cells that are able to be scheduled by the DCI and a cell to transfer the DCI via RRC information element, thereby achieving flexible configuration of the DCI and cells that can be scheduled by the DCI, and balancing DCI loads for the multiple cells.

The present disclosure also provides a network device, which will be described below with reference to FIG. 4.

FIG. 4 is a structural diagram of a network device according to some embodiments of the present disclosure. As shown in FIG. 4, the network device 40 of the embodiment comprises: a transmitter 410; or the network device 40 comprises a transmitter 410 and a receiver 420.

The transmitter 410 is configured to send downlink control information (DCI) to a terminal, wherein the DCI comprises control information for physical downlink shared channels (PDSCHs) or physical uplink shared channels (PUSCHs) in multiple cells, the DCI is configured to schedule the PDSCHs or PUSCHs in part or all of the multiple cells, and the transmitter is configured to send the PDSCHs to the terminal in the part or all of the cells.

In some embodiments, the transmitter 410 is further configured to send a radio resource control (RRC) information element to the terminal, wherein the RRC information element comprises information indicating the multiple cells in which the PDSCHs or PUSCHs that are able to be scheduled by the DCI are located.

In some embodiments, a serving cell configuration information element in the RRC information element comprises first indication information, wherein the first indication information is configured to indicate that a PDSCH or PUSCH in a cell corresponding to the serving cell configuration information element is able to be scheduled by the DCI.

In some embodiments, the transmitter 410 is further configured to send a radio resource control (RRC) information element to the terminal, wherein the RRC information element comprises information indicating a cell for transferring the DCI to enable the terminal to receive the DCI in the cell for transferring the DCI.

In some embodiments, a serving cell configuration information element in the RRC information element comprises second indication information, wherein the second indication information is configured to indicate that the DCI is to be transferred in a cell corresponding to the serving cell configuration information element, or the second indication information is configured to indicate a cell in which the DCI for scheduling a PDSCH or PUSCH in a cell corresponding to the serving cell configuration information element is located.

In some embodiments, the control information for the PDSCHs or PUSCHs in the multiple cells comprises: common control information of the multiple cells and dedicated control information corresponding to each of the multiple cells.

In some embodiments, the common control information of the multiple cells occupies consecutive bit positions in the DCI; the dedicated control information corresponding to the each of the multiple cells occupies consecutive bit positions in the DCI; and the bit positions occupied by the common control information of the multiple cells are lower than the bit positions occupied by the dedicated control information corresponding to the each of the multiple cells.

In some embodiments, the common control information of the multiple cells and the dedicated control information corresponding to the each of the multiple cells occupy a plurality of fields in the DCI, wherein the plurality of fields comprise a first field with a fixed number of bits and a second field with a number of bits determined by configuration information of the multiple cells, and in all the fields in the DCI, a bit position occupied by the first field is lower than a bit position occupied by the second field.

In some embodiments, the dedicated control information corresponding to a same cell occupies consecutive bit positions; and the bit positions occupied by the dedicated control information corresponding to different cells are arranged in the DCI in a predetermined order.

In some embodiments, the dedicated control information corresponding to the each of the multiple cells comprises one or more types of information, each of the one or more types of information occupying one field; and the bit positions occupied by information corresponding to different cells occupying a same field are consecutive and are arranged in a predetermined order.

In some embodiments, the predetermined order is an ascending or descending order of cell indices of the multiple cells from a low bit position to a high bit position in the DCI; or the RRC information element sent from the network device to the terminal comprise: bit position indices of the dedicated control information corresponding to the multiple cells, wherein the predetermined order is an ascending or descending order of the bit position indices of the dedicated control information corresponding to the multiple cells from a low bit position to a high bit position in the DCI.

In some embodiments, for the each of the multiple cells, in response to the DCI not scheduling a PDSCH or PUSCH for the each of the multiple cells, the common control information indicates invalid control information for the each of the multiple cells and/or the dedicated control information corresponding to the each of the multiple cells indicates invalid control information.

The receiver 420 is configured to receive PUSCHs sent from the terminal in the part or all of the cells.

For the details of the DCI and the RRC information element, reference can be made to the foregoing embodiments, which will not be repeated herein.

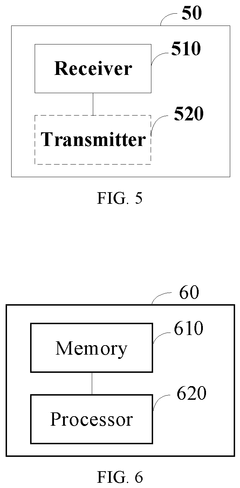

The present disclosure also provides a terminal, which will be described below with reference to FIG. 5.

FIG. 5 is a structural diagram of a terminal according to some embodiments of the present disclosure. As shown in FIG. 5, the terminal 50 of the embodiment comprises a receiver 510; or the terminal 50 comprises a receiver 510 and a transmitter 520.

The receiver 510 is configured to receive downlink control information (DCI) message sent from a network device, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells, and the receiver 510 is configured to receive PDSCHs sent from the network device in the part or all of the cells according to the DCI.

In some embodiments, the receiver 510 is further configured to receive a radio resource control (RRC) information element sent from the network device, wherein the RRC information element comprise information indicating the multiple cells in which the PDSCHs or PUSCHs that are able to be scheduled by the DCI are located, and/or information indicating a cell for transferring the DCI.

The transmitter 520 is configured to send the PUSCHs to the network device in the part or all of the cells according to the DCI.

For the details of the DCI and the RRC information element, reference can be made to the foregoing embodiments, which will not be repeated herein.

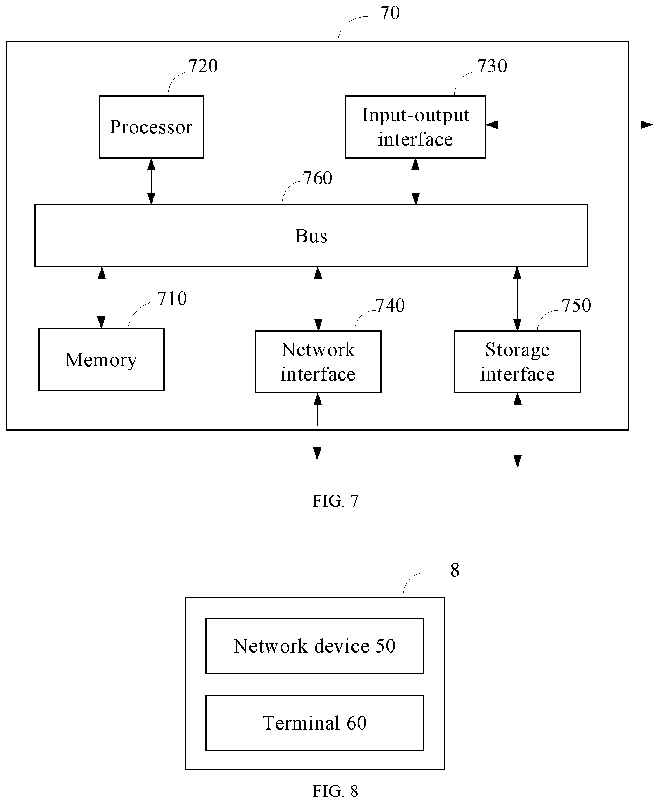

A communication apparatus (e.g., the network device or the terminal) in an embodiment of the present disclosure may be implemented by various computing devices or computer systems, which will be described below with reference to FIGS. 6 and 7.

FIG. 6 is a structural diagram of a communication apparatus according to some embodiments of the present disclosure. As shown in FIG. 6, the apparatus 60 of the embodiment comprises: a memory 610 and a processor 620 coupled to the memory 610, the processor 620 being configured to, based on instructions stored in the memory 610, execute the resource scheduling method according to any one of the embodiments of the present disclosure.

The memory 610 may comprise, for example, a system memory, a fixed non-volatile storage medium, or the like. The system memory stores, for example, an operating system, applications, a boot loader, a database, and other programs.

FIG. 7 is a structural diagram of a communication apparatus according to other embodiments of the present disclosure. As shown in FIG. 7, the apparatus 70 of the embodiment comprises: a memory 710 and a processor 720 that are similar to the memory 610 and the processor 620, respectively. It may further comprise an input-output interface 730, a network interface 740, a storage interface 750, and the like. These interfaces 730, 740, 750, the memory 710 and the processor 720 may be connected through a bus 760, for example. The input-output interface 730 provides a connection interface for an input-output device such as a display, a mouse, a keyboard, or a touch screen. The network interface 740 provides a connection interface for various networked devices. For example, it can be connected to a database server or a cloud storage server. The storage interface 750 provides a connection interface for an external storage device such as an SD card or a USB flash disk.

The present disclosure also provides a resource scheduling system, which will be described below with reference to FIG. 8.

FIG. 8 is a structural diagram of a resource scheduling system according to some embodiments of the present disclosure. As shown in FIG. 8, the system 8 of the embodiment comprises: a network device 50 and a terminal 60 according to any one of the foregoing embodiments.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software elements. Moreover, the present disclosure may take the form of a computer program product embodied on one or more computer-usable non-transitory storage media (comprising but not limited to disk storage, CD-ROM, optical storage device, etc.) having computer-usable program code embodied therein.

The present disclosure is described with reference to flowcharts and/or block diagrams of methods, apparatuses (systems) and computer program products according to embodiments of the present disclosure. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus generates means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture comprising instruction means implementing the functions specified in one or more flows of the flowcharts and/or one or more blocks of the block diagrams.

These computer program instructions can also be loaded onto a computer or other programmable data processing apparatus to perform a series of operation steps on the computer or other programmable data processing apparatus to generate a computer-implemented process such that the instructions executed on the computer or other programmable data processing apparatus provide steps implementing the functions specified in one or more flows of the flowcharts and/or one or more blocks of the block diagrams.

The above is merely preferred embodiments of the present disclosure, and is not limitation to the present disclosure. Within spirit and principles of the present disclosure, any modification, replacement, improvement and etc. shall be contained in the protection scope of the present disclosure.

## Claims

1. A resource scheduling method performed by a network device, comprising:
sending downlink control information (DCI) to a terminal, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells; and
sending the PDSCHs to the terminal or receiving the PUSCHs sent from the terminal in the part or all of the cells.

2. The resource scheduling method according to claim 1, further comprising: sending a radio resource control (RRC) information element to the terminal before sending the DCI to the terminal, wherein the RRC information element comprises information indicating the multiple cells in which the PDSCHs or PUSCHs that are able to be scheduled by the DCI are located.

3. The resource scheduling method according to claim 2, wherein a serving cell configuration information element in the RRC information element comprises first indication information, wherein the first indication information is configured to indicate that a PDSCH or PUSCH in a cell corresponding to the serving cell configuration information element is able to be scheduled by the DCI.

4. The resource scheduling method according to any one of claims 1 to 3, further comprising: sending a radio resource control (RRC) information element to the terminal before sending the DCI to the terminal, wherein the RRC information element comprises information indicating a cell for transferring the DCI to enable the terminal to receive the DCI in the cell for transferring the DCI.

5. The resource scheduling method according to claim 4, wherein a serving cell configuration information element in the RRC information element comprises second indication information, wherein the second indication information is configured to indicate that the DCI is to be transferred in a cell corresponding to the serving cell configuration information element, or the second indication information is configured to indicate a cell in which the DCI for scheduling a PDSCH or PUSCH in a cell corresponding to the serving cell configuration information element is located.

6. The resource scheduling method according to any one of claims 1 to 5, wherein the control information for the PDSCHs or PUSCHs in the multiple cells comprises: common control information of the multiple cells and dedicated control information corresponding to each of the multiple cells.

7. The resource scheduling method according to claim 6, wherein:
the common control information of the multiple cells occupies consecutive bit positions in the DCI;
the dedicated control information corresponding to the each of the multiple cells occupies consecutive bit positions in the DCI; and
the bit positions occupied by the common control information of the multiple cells are lower than the bit positions occupied by the dedicated control information corresponding to the each of the multiple cells.

8. The resource scheduling method according to claim 6, wherein:
the common control information of the multiple cells and the dedicated control information corresponding to the each of the multiple cells occupy a plurality of fields in the DCI, wherein the plurality of fields comprise a first field with a fixed number of bits and a second field with a number of bits determined by configuration information of the multiple cells, and in all the fields in the DCI, a bit position occupied by the first field is lower than a bit position occupied by the second field.

9. The resource scheduling method according to claim 6, wherein:
the dedicated control information corresponding to a same cell occupies consecutive bit positions; and
the bit positions occupied by the dedicated control information corresponding to different cells are arranged in the DCI in a predetermined order.

10. The resource scheduling method according to claim 6, wherein:
the dedicated control information corresponding to the each of the multiple cells comprises one or more types of information, each of the one or more types of information occupying one field; and
the bit positions occupied by information corresponding to different cells occupying a same field are consecutive and are arranged in a predetermined order.

11. The resource scheduling method according to claim 9 or 10, wherein:
the predetermined order is an ascending or descending order of cell indices of the multiple cells from a low bit position to a high bit position in the DCI; or
the RRC information element sent to the terminal comprises: bit position indices of the dedicated control information corresponding to the multiple cells, wherein the predetermined order is an ascending or descending order of the bit position indices of the dedicated control information corresponding to the multiple cells from a low bit position to a high bit position in the DCI.

12. The resource scheduling method according to claim 6, wherein:
for the each of the multiple cells, in response to the DCI not scheduling a PDSCH or PUSCH for the each of the multiple cells, the common control information indicates invalid control information for the each of the multiple cells and/or the dedicated control information corresponding to the each of the multiple cells indicates invalid control information.

13. The resource scheduling method according to claim 6, wherein for the each of the multiple cells, in response to all or part of bits of the dedicated control information corresponding to the each of the multiple cells indicating invalid control information, it indicates that no scheduling is performed for a PDSCH or PUSCH in the each of the multiple cells.

14. The resource scheduling method according to claim 13, wherein all or part of bits of the dedicated control information corresponding to the each of the multiple cells indicating invalid control information comprises: all bits of the dedicated control information corresponding to the each of the multiple cells in a field indicating frequency domain resource assignment being set to 0 or 1.

15. A resource scheduling method performed by a terminal, comprising:
receiving downlink control information (DCI) message sent from a network device, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells; and
receiving PDSCHs sent from the network device or sending PUSCHs to the network device in the part or all of the cells according to the DCI.

16. The resource scheduling method according to claim 15, further comprising: receiving a radio resource control (RRC) information element sent from the network device before the terminal receiving the DCI sent from the network device, wherein the RRC information element comprise information indicating the multiple cells in which the PDSCHs or PUSCHs that are able to be scheduled by the DCI are located, and/or information indicating a cell for transferring the DCI.

17. The resource scheduling method according to claim 15 or 16, wherein the control information for PDSCHs or PUSCHs in the multiple cells comprises: common control information of the multiple cells and dedicated control information corresponding to each of the multiple cells.

18. The resource scheduling method according to claim 17, wherein for the each of the multiple cells, in response to all or part of bits of the dedicated control information corresponding to the each of the multiple cells indicating invalid control information, it indicates that no scheduling is performed for a PDSCH or PUSCH in the each of the multiple cells.

19. The resource scheduling method according to claim 18, wherein all or part of bits of the dedicated control information corresponding to the each of the multiple cells indicating invalid control information comprises: all bits of the dedicated control information corresponding to the each of the multiple cells in a field indicating frequency domain resource assignment being set to 0 or 1.

20. A network device, wherein the network device comprises a transmitter, or the network device comprises a transmitter and a receiver;
the transmitter is configured to send downlink control information (DCI) to a terminal, wherein the DCI comprises control information for physical downlink shared channels (PDSCHs) or physical uplink shared channels (PUSCHs) in multiple cells, the DCI is configured to schedule the PDSCHs or PUSCHs in part or all of the multiple cells, and the transmitter is configured to send the PDSCHs to the terminal in the part or all of the cells;
the receiver is configured to receive PUSCHs sent from the terminal in the part or all of the cells.

21. A terminal, wherein the terminal comprises a receiver, or the terminal comprises a transmitter and a receiver;
the receiver is configured to receive downlink control information (DCI) message sent from a network device, wherein the DCI comprises control information for physical downlink shared channels (PDSCHs) or physical uplink shared channels (PUSCHs) in multiple cells, and the DCI is configured to schedule the PDSCHs or PUSCHs in part or all of the multiple cells, and the receiver is configured to receive PDSCHs sent from the network device in the part or all of the cells according to the DCI; and
the transmitter is configured to send the PUSCHs to the network device in the part or all of the cells according to the DCI.

22. A communication apparatus, comprising:
a processor; and
a memory coupled to the processor for storing instructions that, when executed by the processor, cause the processor to execute the resource scheduling method according to any one of claims 1 to 19.

23. A resource scheduling system, comprising: the network device according to claim 20 and the terminal according to claim 21.
